# EUROPEAN PATENT APPLICATION

(11) **EP 4 212 820 A1**
(43) Date of publication of application: **19.07.2023**
(21) Application number: 23151346.6
(22) Date of filing: 12.01.2023
(51) Int. Cl.: G01B 11/02, B62D 63/00, B62D 53/00, B62D 6/00

(54) **TRACTOR-TRAILER**

(30) Priority: 14.01.2022 IT 202200000518
(71) Applicant: TOYOTA MATERIAL HANDLING MANUFACTURING ITALY S.p.A, 40132 Bologna (IT)
(72) Inventor: PESSO, Tommaso, POGGIO RENATICO (FERRARA) (IT); GIOVANNUCCI, Monica, BOLOGNA (IT)
(74) Representative: Casadei, Barbara

(57) **Abstract**

Described is a tractor-trailer comprising a tractor unit (2); at least one trailer (3) connected to the tractor unit (2) configured for transporting at least one load (4); a detection device (5) configured for detecting an area defined by at least part of the trailer (3) and the surrounding environment. The tractor-trailer comprises a system (6) for lifting the detection device (5); the lifting system (6) is configured to move the detection device (5) at least from a first height (Q1) to a second height (Q2), greater than the first height (Q1), and vice versa.

## Description

This invention relates to a tractor-trailer which is widely used in industry and in particular in industrial production chains, but also, for example, in ports, airport and interports.

As is known, tractor-trailers are small vehicles equipped with a manual, semi-autonomous or autonomous driving system, which is able to move a generic load from one point to another of a factory, or for example a shed, or along a production chain.

The tractor-trailers used to manage and coordinate the transport of materials in an industrial context generally consist of a tractor unit which pulls one or more trailers.

The load to be transported, which may have different shapes and sizes, is positioned on a respective trailer.

Typically, the loads transported by the tractor-trailers have "standard" dimensions and measurements.

However, loads may be transported for which the dimensions do not meet the "standard" requirements, thus determining unplanned overall dimensions.

A so-called "oversize load" requires certain measures to be taken in the positioning on the trailer, in order to comply with a correct distribution of the weight, so as to prevent a relative movement of the load, or its overturning, during the travel of the tractor-trailer.

In addition, in the sector, attempts are made to automate as much as possible the driving of these tractor-trailers and in this scenario the presence of an "oversize load" may result in sudden deviations relative to a predetermined advancement trajectory, for example if the load protrudes with respect to the trailer on which it is positioned, thereby striking an unexpected impediment, or, for example, if the load overturns on a bend. Prior art solutions comprise fixed optical sensors designed to detect the presence of a load on a respective trailer, however an optical sensor for which the position is fixed results in obvious structural limits, including not being able to detect the overall dimensions of a load the height of which exceeds the sensor.

In this technical context, the Applicant felt the need to provide a new tractor-trailer comprising the technical features described according to independent claim 1.

Advantageously, the tractor-trailer makes it possible to acquire information on the trailer and on the surrounding environment, adapting itself to the overall dimensions of the load transported by the trailer.

The features of the invention are clearly described in the claims below and its advantages are more apparent from the detailed description which follows, with reference to the accompanying drawings which illustrate a preferred, non-limiting example embodiment of the invention and in which:

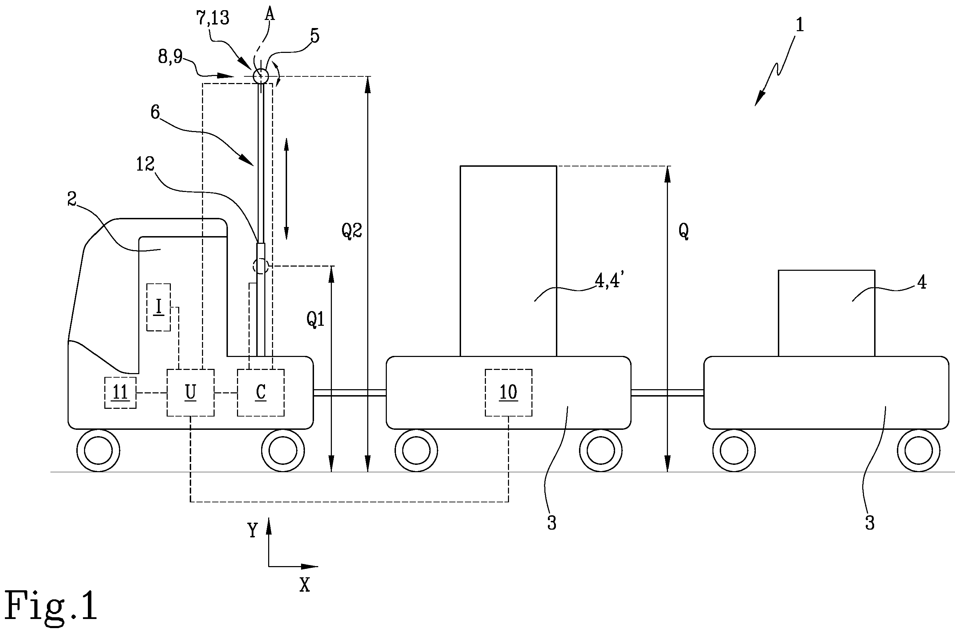

- Figure 1 is a schematic side view of an embodiment of the tractor-trailer according to the invention;
- Figure 2 is a schematic top view of an embodiment of the tractor-trailer according to the invention.

With reference to the accompanying drawings, the numeral 1 denotes a tractor-trailer according to the invention.

The tractor-trailer 1 is configured for moving various types of materials, including, for example, but without limiting the scope of the invention, components for machinery, packaging, spare parts, pallets.

According to the invention, the tractor-trailer 1 comprises a tractor unit 2 and at least one trailer 3 connected to the tractor unit 2.

The tractor unit 2 is the part of the tractor-trailer 1 which directs the trajectory of forward movement.

The trailer 3 is connected to the tractor unit 2 and is configured for transporting at least one load 4.

For greater clarity, the term "load" is used to mean, for the entire description, any object being transported by the tractor-trailer 1.

The tractor-trailer 1 comprises a detection device 5 configured for detecting an area defined by at least part of the trailer 3 and the surrounding environment.

According to a preferred embodiment, the detection device 5 is an optical sensor, for example, in a non-limiting manner, of the lidar, laser, scanner or video camera type.

According to an embodiment, the detection device 5 is a radar.

According to the invention, the tractor-trailer 1 comprises a system 6 for lifting the detection device 5.

The lifting system 6 is configured to move the detection device 5 at least from a first height Q1 to a second height Q2, greater than the first height Q1, and vice versa.

In other words, the lifting system 6 is configured for moving the detection device 5 to different possible heights, raising or lowering the detection device 5.

The lifting system 6 of the detection device 5 is configured to move the detection device 5 to a height greater than the top of a load 4.

The term "top" is used to mean the maximum height reached by the load 4.

In other words, if the height of the load 4 on the trailer 3 means that the top of the load 4 is at a height Q greater than the first height Q1 at which the detection device 5 is positioned, the lifting system 6 moves the detection device 5 so that it reaches a second height Q2 greater than the height Q.

Advantageously, the lifting system 6 prevents the detection of data by the detection device 5 from being limited or prevented by the height of the load 4.

In fact, considering, for example, an embodiment wherein the detection device 5 is an optical sensor, a load 4 which reaches a height greater than the height at which the detection device 5 is positioned would significantly limit the effective field of vision, preventing the detection of any object located outside the load 4.

According to an aspect of the invention, the tractor-trailer 1 comprises a control unit U.

The control unit U is configured to receive and process the data detected by the detection device 5, that is to say, the data relating to the area defined by at least part of the trailer 3 and the surrounding environment. The control unit U is configured to determine at least one size of the load 4 starting from the processing of the data detected by the detection device 5.

The size of the load 4 determined by the control unit U is, for example, the volume or a surface of the load 4.

Preferably, the at least one size corresponds to at least one between length, width and height of the load 4.

Advantageously, starting from the determination of the size of the load 4, the control unit U is able to determine overall dimensions of the load 4. The expression "determine overall dimensions of the load 4" is used to mean determining at least one, preferably two, between the length, width and height of the load 4.

In fact, determining these dimensions determines the space occupied by the load 4.

According to a preferred embodiment, the tractor-trailer 1 comprises a plurality of trailers 3 which are connected to each other.

The control unit U is configured to receive and process at least one piece of information relating to the number of trailers 3.

The control unit U is configured to receive the data measured by the detection device 5 and is configured to process the number of trailers 3 of the tractor-trailer 1.

According to an aspect of the invention, the control unit U is configured for determining for each trailer 3 at least one size of the load 4.

Preferably, these sizes correspond to the length, width and height of the load 4 positioned on each of the trailers 3 of the tractor-trailer 1. Advantageously, starting with the determination of these sizes, the control unit U can determine, for each of the trailers 3, overall dimensions of a respective load 4.

The lifting system 6 comprises an actuator 12, for example a telescopic pneumatic jack or an electric linear actuator.

According to an embodiment, the actuator 12 of the lifting system 6 is a four-bar linkage.

According to a preferred embodiment, the detection device 5 and the respective lifting system 6 are positioned on the tractor unit 2.

According to an aspect of the invention, the tractor-trailer 1 comprises means 7 for moving the detection device 5.

The movement means 7 are configured to rotate the detection device 5 about an axis of rotation A.

In other words, the movement means 7 are configured for moving the detection device 5 according to at least one degree of rotational freedom. The axis of rotation A of the detection device 5 is a horizontal axis positioned transversal to the direction of forward movement of the tractor-trailer 1.

In other words, the axis of rotation A is positioned along a direction Z according to an XYZ Cartesian system, wherein the direction of the axis X is a horizontal direction, the direction of the axis Y is vertical and the direction of forward movement of the tractor-trailer 1 is parallel to the axis X.

Advantageously, the rotation of the detection device 5 about the axis of rotation A makes it possible to modify the area which the detection device 5 detects.

The rotation of the detection device 5 about the axis of rotation A allows the detection device 5 to be inclined downwards, that is to say, towards the ground, to improve the acquisition of data measured in the field of vision.

According to an alternative embodiment, the movement means 7 comprise a ball joint configured to allow the rotation of the detection device 5 according to three degrees of rotational freedom.

According to an embodiment, the movement means 7 comprise an actuator 13 configured to rotate the detection device 5.

The actuator 13 is, for example, a rotary electric motor.

Advantageously, thanks to the system 6 for lifting the detection device 5 and the movement means 7, it is possible to obtain data regarding an area defined by at least part of the trailer 3 and the environment surrounding the tractor-trailer 1 using a single detection device 5, for example, with a single optical sensor.

According to an aspect of the invention, the tractor-trailer 1 comprises a first sensor 8 configured to measure a vertical movement of the detection device 5.

Preferably, the first sensor 8 is an encoder, for example a linear encoder. Preferably, the first sensor 8 is an incremental or absolute linear encoder. The first sensor 8 is, for example, a magnetic, optical or capacitive encoder.

According to an embodiment, the first sensor 8 detects the height (Q1, Q2) of the detection device 5.

The control unit U is configured to receive and process the data detected by the first sensor 8.

According to an aspect of the invention, the tractor-trailer 1 comprises a second sensor 9 configured to detect an angular movement of the detection device 5 about the axis of rotation A.

Preferably, the second sensor 9 is an encoder, for example a rotary encoder.

Preferably, the second sensor 9 is an incremental or absolute linear encoder.

The second sensor 9 is, for example, a magnetic, optical or capacitive encoder.

The control unit U is configured to receive and process the data detected by the second sensor 9.

According to an aspect of the invention, the control unit U is configured to receive and process the data detected by the first sensor 8 and by the second sensor 9 in combination with data detected by the detection device 5.

Advantageously, combining the data detected by the first sensor 8 and by the second sensor 9 with the data detected by the detection device 5 makes it possible to associate height and angular movement of the detection device 5 with the data of the area which the detection device 5 has detected.

According to a preferred embodiment, the tractor-trailer 1 comprises a control unit C configured for sending a control signal of the lifting system 6 and/or of the movement means 7.

In other words, the control unit C, by means of control signals, activates the lifting system 6 and/or the movement means 7 respectively for translating vertically and/or rotating the detection device 5.

The control unit C is connected to the control unit U.

The control signal is sent, for example, as a function of the height Q reached by the load 4 or as a function of a size of the load 4 determined by the control unit U.

The control unit U is configured for determining a plurality of vertices V of a flat surface S defining a top surface S1 of the load 4 positioned on a respective trailer 3.

According to an embodiment, the control unit U is configured to perform a reconstruction of images as a function at least of the data detected by the detection device 5.

Advantageously, determining a plurality of vertices V of a flat surface S defining a top surface S1 of the load 4 makes it possible to recognise the presence or absence of the load 4 on the trailer 3.

Advantageously, determining a plurality of vertices V of a flat surface S defining a top surface S1 of the load 4 makes it possible to obtain information regarding the overall dimensions of the load 4 positioned on the trailer 3.

For greater clarity, by way of a non-limiting example, a description is given below, with reference to the accompanying drawings, of what occurs in the case of a load 4' in the shape of a parallelepiped positioned on a trailer 3 of the tractor-trailer 1.

The top of the load 4' reaches the height Q which is greater than the height Q1 at which the detection device 5 makes first contact.

The control unit C sends a control signal of the lifting system 6.

The lifting system 6 moves the detection device 5 to a height Q2 greater than the height Q and the first sensor 8 detects the vertical movement of the detection device 5.

The control unit C sends a control signal of the movement means 7.

The movement means 7 rotate the detection device 5 about the axis of rotation A in such a way that it is directed towards the load 4'.

At the same time, the second sensor 9 measures the angular movement of the detection device 5 about the axis of rotation A.

The control unit U receives and processes the data detected by the first sensor 8 and by the second sensor 9, to determine an operating condition of the detection device 5, and by the detection device 5, including the distances between the device itself and a plurality of points defining the load 4'.

From the processing of this data, having determined the operating condition of the detection device 5, the control unit U is able to determine the vertices B, B', C, C' defining the top surface S1 of the load 4'.

The control unit U is therefore able to determine the presence of the load 4' and to provide information on the overall dimensions of the load 4'. According to an aspect of the invention, the trailer 3 comprises a weight sensor 10 configured for measuring the weight of the load 4.

The weight sensor 10 is preferably a load cell.

The control unit U is configured to receive and process the data detected by the weight sensor 10.

Advantageously, measuring the weight of the load 4 and processing the data using the control unit U makes it possible to obtain information regarding the distribution of the loads 4 on the individual trailer 3 and in general on the tractor-trailer 1.

Advantageously, knowing the distribution of the loads 4 on the individual trailer 3 and in general on the tractor-trailer 1 makes it possible to know whether the positioning of the loads 4 on the trailer 3 is optimum, in particular in relation to the path on which the tractor-trailer 1 must move. According to an aspect of the invention, the control unit U is configured for comparing the top surface S1 of the load 4 and/or the weight of the load 4 with predetermined surface and/or weight values and defining a type of load 4.

The control unit U has access to an archive in which the predetermined surface and/or weight values are stored.

Preferably, the control unit U is configured to compare at least one predetermined size of the load 4, for example length, width or height, with predetermined values of the size and defining a type of load 4.

The control unit U has access to an archive in which the predetermined values of at least one size are stored.

The predetermined values are stored in the database individually and/or grouped in ranges.

For example, in a non-limiting manner, the predetermined values determine the "small", "medium" and "large" ranges which define three different types of load 4 and the control unit U determines in which type each load 4 is to be positioned as a function of the values of the load 4 determined and/or detected and/or measured.

Advantageously, the comparison between the predetermined and/or detected and/or measured values and predetermined values allows the loads 4 positioned on the trailer 3 to be catalogued.

Advantageously, each catalogued load 4 allows the control unit U to determine whether the load 4 positioned on the trailer 3 is the expected load 4.

The control unit U is configured for controlling the tractor unit 2 as a function of the type of load 4 defined.

In other words, the control unit U is configured for stopping the tractor-trailer 1 or setting up or modifying the advancement trajectory of the tractor-trailer 1 as a function of the type of load 4 positioned on the trailer 3.

Advantageously, the control unit U configured for controlling the tractor unit 2 as a function of the type of load 4 defined makes it possible, for example, to avoid collisions for protruding loads 4, limiting the dangerous situations of falling of a load 4, defining optimum trajectories and forward speed for the tractor-trailer 1.

According to an embodiment, the tractor-trailer 1 comprises an interface I connected to the control unit.

The interface I is configured to receive from a user information regarding the load 4: predetermined values of surface and/or weight and/or sizes and/or type of load.

In other words, the user, using the interface I, can enter the expected load 4 parameters even when the load 4 is not between the standard loads 4 whose parameters are stored in the database.

According to an aspect of the invention, the interface I is configured to receive information regarding the number of trailers 3 of the tractor-trailer 1.

According to an embodiment, the interface I is configured to display the reconstructed images as a function of the data detected by the detection device 5.

In other words, the interface I is configured for displaying, preferably in real time, a diagram of the shape of the load 4.

Advantageously, the display on the interface I of the shapes of the loads 4 positioned on the trailer 3 allows a user to monitor which loads 4 are positioned on the tractor-trailer 1.

According to a preferred embodiment, the tractor unit 2 is an autonomous or semi-autonomous driving unit.

According to a further embodiment, the tractor unit 2 is guided manually. According to an aspect of the invention, the tractor-trailer 1 comprises an electric actuator 11.

The electric actuator 11 is configured to move the tractor-trailer 1. According to an aspect of the invention, the control unit U is configured for determining the relative angular position of an advancement trajectory of the tractor unit 2 relative to an advancement trajectory of the trailer 3.

The control unit U is configured for determining the relative angular position of an advancement trajectory of a trailer 3 relative to an advancement trajectory of a trailer 3 consecutive to it.

In other words, the control unit U is able to determine whether the tractor-trailer 1 has all its components, tractor unit 2 and trailers 3, which are aligned with each other according to a common advancement direction.

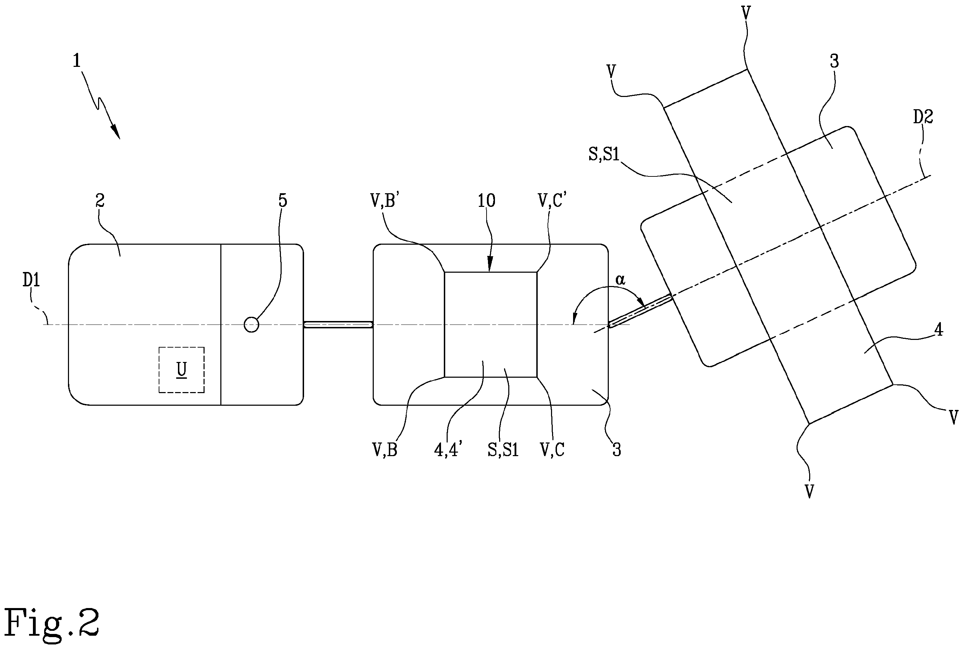

If the tractor unit 2 and a trailer 3, or a trailer 3 and the trailer 3 consecutive to it, do not have the same trajectory of forward movement, the control unit U is able to determine the difference between the relative angular positions between the different directions of forward movement. By way of example, with reference in particular to Figure 2, D1 is considered as an advancement direction of the tractor unit 2 and D2 as an advancement direction of a trailer 3.

The control unit U is configured for determining, continuously over time, the relative angular position of a trajectory of forward movement of the tractor unit 2 relative to an advancement direction of the trailer 3 and therefore determining the angle α between the advancement direction D1 of the tractor unit 2 and the advancement direction D2 of a trailer 3. Advantageously, the possible determination of the difference between the relative angular positions between the different directions of forward movement of the tractor unit 2 and of a trailer 3, or of a trailer 3 and of the trailer 3 consecutive to it, makes it possible to monitor the movement of the tractor-trailer 1.

Advantageously, the determination of a difference between the relative angular positions between the different directions of forward movement of the tractor unit 2 and of a trailer 3, or of a trailer 3 and of the trailer 3 consecutive to it, makes it possible to stop or correct the movement of the tractor-trailer 1 if the difference is not planned.

## Claims

1. A tractor-trailer comprising:
a tractor unit (2);
at least one trailer (3) connected to the tractor unit (2) configured for transporting at least one load (4);
a detection device (5) configured for detecting an area defined by at least part of the trailer (3) and the surrounding environment,
said tractor-trailer being **characterised in that** it comprises a system (6) for lifting the detection device (5), the lifting system (6) being configured to move the detection device (5) at least from a first height (Q1) to a second height (Q2), greater than the first height (Q1), and vice versa.

2. The tractor-trailer according to independent claim 1, **characterised in that** it comprises a control unit (U) configured to receive and process the data detected by the detection device (5); the control unit (U) is configured to determine at least one size of the load (4), preferably the width, length and height of the load (4).

3. The tractor-trailer according to any one of the preceding claims, **characterised in that** it comprises a plurality of trailers (3) connected to each other and **in that** the control unit (U) is configured to receive and process at least one piece of information relating to the number of trailers (3) and is configured to determine for each trailer (3) at least one size of the load (4), preferably the width, the length and the height of the load (4).

4. The tractor-trailer according to any one of the preceding claims, **characterised in that** it comprises means (7) for moving the detection device (5) configured to rotate the detection device (5) about an axis of rotation (A).

5. The tractor-trailer according to the preceding claim, **characterised in that** the axis of rotation (A) of the detection device (5) is a horizontal axis positioned transversal to the direction of travel of the tractor-trailer.

6. The tractor-trailer according to any one of the preceding claims, **characterised in that** it comprises a first sensor (8) configured to measure a vertical movement of the detection device (5).

7. The tractor-trailer according to claim 4 or 5, **characterised in that** it comprises a second sensor (9) configured to measure an angular movement of the detection device (5) about the axis of rotation (A).

8. The tractor-trailer according to claim 6 or 7, **characterised in that** the control unit (U) is configured to receive and process the data measured by the first sensor (8) and by the second sensor (9) in combination with data detected by the detection device (5); the control unit (U) is configured for determining a plurality of vertices (V) of a flat surface (S) defining a top surface (S1) of the load (4) positioned on a respective trailer (3).

9. The tractor-trailer according to any one of the preceding claims, **characterised in that** the trailer (3) comprises a weight sensor (10) configured to measure the weight of the load (4).

10. The tractor-trailer according to claim 8 or 9, **characterised in that** the control unit (U) is configured to compare the top surface (S1) of the load (4) and/or the weight of the load (4) with predetermined surface and/or weight values and to define a type of load (4) and is configured to control the tractor unit (2) as a function of the type of load (4) defined.

11. The tractor-trailer according to any one of the preceding claims, **characterised in that** the tractor unit (2) is driven autonomously or semi-autonomously.

12. The tractor-trailer according to any one of the preceding claims, **characterised in that** it comprises an electric actuator (11) configured to move the tractor-trailer.

13. The tractor-trailer according to any one of claims 2 to 12, **characterised in that** the control unit (U) is configured to determine the relative angular position of a forward movement trajectory of the traction unit (2) relative to a forward movement trajectory of the trailer (3) and/or to determine the relative angular position of a forward movement trajectory of a trailer (3) relative to a forward movement trajectory of a trailer (3) consecutive to it.
